# EUROPÄISCHE PATENTSCHRIFT

(11) **EP 2 119 648 B1**
(45) Veröffentlichungstag und Bekanntmachung des Hinweises auf die Patenterteilung: **06.07.2011**
(21) Anmeldenummer: 09450091.5
(22) Anmeldetag: 30.04.2009
(51) Int. Cl.: B65G 47/51, B07C 5/14

(54) **Sortieranlage**
Sorting assembly
Installation de tri

(30) Priorität: 08.05.2008 AT 7452008
(43) Veröffentlichungstag der Anmeldung: 18.11.2009
(73) Patentinhaber: Springer Maschinenfabrik AG, 9360 Friesach (AT)
(72) Erfinder: Roth, Heinz, 9360 Friesach (AT); Pichler, Bernhard, 9360 Friesach (AT)
(74) Vertreter: Gibler & Poth Patentanwälte OG

(56) Entgegenhaltungen:
- EP-A1- 0 129 532
- EP-A2- 1 099 486
- WO-A1-2009/055835

## Beschreibung

Die Erfindung betrifft eine Sortieranlage für längliches Stückgut im Quertransport gemäß dem Oberbegriff des Patentanspruches 1. Eine solche Sortieranlage ist aus der EP 129 532 A1 bekannt.

Sortieranlagen für längliches Stückgut im Quertransport sind bekannt, wobei die Sortieranlagen mehrere Sortierbahnen umfassen. Zum Sortieren der länglichen Stückgüter werden aufeinander folgende längliche Stückgüter beim Antransport vorbestimmt auf mehrere Sortierbahnen verteilt. Die Anlieferreihenfolge entspricht dabei oftmals nicht der gewünschten Sortierung und ist daher im Sinne der gewünschten Sortierung unsortiert. Ebenso werden die länglichen Stückgüter in vorbestimmter Abfolge, welche nunmehr der gewünschten Sortierung entspricht, also in diesem Sinne in sortierter Reihenfolge, aus den mehreren Sortierbahnen abtransportiert. Dabei werden zur Sortierung, also zur Änderung der Reihenfolge aufeinander folgender länglicher Stückgüter, längliche Stückgüter an anderen länglichen Stückgütern vorbeigeführt. Die Sortierbahnen sind dazu üblicherweise horizontal übereinander angeordnet, und werden dabei oftmals als horizontale Filmetagen bezeichnet. Die Anzahl der Sortierbahnen bestimmt dabei die maximal mögliche Sortimentanzahl. Das Sortiment steht dabei für das in die Sortierbahnen sortierte längliche Stückgut. Die Sortimentanzahl ist dabei die Anzahl der Sortierbahnen, und steht für die Anzahl der Möglichkeiten ein länglichen Stückgutes in die Sortieranlage, also in die erste, die zweite, die dritte u.s.w. Sortierbahn der Sortieranlage, einzusortieren.

Die Sortierbahnen können mit einem Greifarm, einem Schwenkarm, einem Lift und/oder einer Falltüre entladen werden. Bei den bekannten Sortieranlagen wird bei der Entladung der Sortierbahnen, also beim Abtransport der länglichen Stückgüter aus der Sortierbahn, der Greifarm, der Schwenkarm und/oder der Lift bewegt, wobei nachteilig ist, dass der Greifarm und/oder der Schwenkarm hin und her bewegt und somit abwechseln beschleunigt und abgebremst wird. Dies ist einerseits energieaufwendig ist und kann andererseits nur begrenzt beschleunigt werden. Dabei wird auch das längliche Stückgut beschleunigt, wobei sich Druckstellen und/oder Schleifspuren am länglichen Stückgut ausbilden können.

Die Bewegung des Lifts wiederum ist langsam und es wird ein Ausstoßer benötigt, welcher das längliche Stückgut aus dem Lift heraus auf die jeweilige vorbestimmte Sortierbahn schiebt. Dabei interagieren mehrere bewegliche Teile, wobei es zu interaktionsbedingten Störungen kommen kann und wobei die Interaktion ebenso lediglich begrenzt beschleunigt werden kann.

Bei einer Falltüre wiederum fallen und/oder rutschen die länglichen Stückgüter über eine vorbestimmte Höhe, wobei die länglichen Stückgüter insbesondere schleifend belastet sind, wobei sich Druckstellen und/oder Schleifspuren ausbilden können.

Die EP 129 532 A1 beschreibt eine Vorrichtung zum Sortieren und Sammeln von Stückgut, insbesondere Schnittholz, mit einer Mehrzahl schräg angeordneter Sortierbahnen, welche von einem Querförderer beschickt werden, und das Stückgut wiederum an einen Quertransporter abgeben.

Aufgabe der Erfindung ist es daher eine Sortieranlage der eingangs genannten Art anzugeben, mit welcher die genannten Nachteile vermieden werden können und mit welcher eine stückgutschonende sowie energieeffiziente Sortierung mit einem hohen Durchsatz gewährleistet werden kann, welche bei vorgegebenen räumlichen Bedingungen eine hohe Sortimentanzahl ermöglicht und bei welcher die Sortimentanzahl einfach und kostengünstig verändert werden kann.

Erfindungsgemäß wird dies durch die Merkmale des Patentanspruches 1 erreicht.

Dadurch ergibt sich der Vorteil, dass der Abtransport im Wesentlichen kontinuierlich erfolgt. Dadurch kann das längliche Stückgut mit hoher Geschwindigkeit aus einer vorgegebenen Sortierbahn abtransportiert werden- Vorteilhaft dabei ist, dass der Abtransporter im Wesentlichen kontinuierlich bewegt werden kann, wodurch Beschleunigungskräfte im Abtransporter gering gehalten werden können und wodurch der Abtransport der länglichen Stückgüter energieeffizient erfolgen kann.

Vorteilhaft dabei ist, dass auf das längliche Stückgut - insbesondere trotz hoher Fördergeschwindigkeit - lediglich geringe Beschleunigungskräfte wirken, womit die Sortierung brettschonend erfolgt. Insbesondere können dadurch stoßbedingte und/oder beschleunigungsbedingte Druckstellen am länglichen Stückgut vermieden werden. Vorteilhaft dabei ist weiters, dass ein Entlangschleifen des länglichen Stückgutes entlang einer Auflage vermieden werden kann, wodurch auch Schleifspuren verhindert werden können.

Vorteilhaft dabei ist, dass durch das Hinzufügen oder Entfernen von Sortierbahnen die Sortimentanzahl einfach und kostengünstig verändert werden kann, wobei lediglich geringe bauliche Änderungen an der gesamten Sortieranlage und/oder an der räumlichen Umgebung notwendig sind.

Die Unteransprüche, welche ebenso wie der Patentanspruch 1 gleichzeitig einen Teil der Beschreibung bildet, betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben-Dabei zeigt:
Fig. 1 in Betriebslage in einer Seitenansicht die Sortieranlage einer besonders bevorzugten ersten Ausführungsform umfassend eine vorbestimmbare Anzahl Sortierbahnen, welche im Wesentlichen horizontal ausgebildet sind, wobei an Ausgabeenden der Sortierbahnen ein als Klappe ausgebildetes Überbrückungselement angeordnet ist, sowie einige längliche Stückgüter;
Fig. 2 in derselben Seitenansicht ein Detail der Sortieranlage der Fig. 1, wobei Teile von fünf Sortierbahnen und drei als Klappen ausgebildete Überbrückungselemente in der Seitenansicht dargestellt sind;
Fig. 3 in derselben Seitenansicht ein Detail B der Fig. 2 und zwei längliche Stückgüter, wobei sich eines der beiden länglichen Stückgüter auf der ersten Sortierbahn befindet und sich das andere der beiden länglichen Stückgüter auf der Abtransportbahn befindet;
Fig. 4 in Betriebslage und ebenso in einer Seitenansicht die Sortieranlage einer bevorzugten zweiten Ausführungsform umfassend eine vorbestimmbare Anzahl von Sortierbahnen, welche - in Betriebslage von einem Aufgabeende zu einem Ausgabeende jeder Sortierbahn gesehen - stetig ansteigend ausgebildet sind, sowie eine längliche Stückgüter;
Fig. 5 in derselben Seitenansicht ein Detail C der Sortieranlage der Fig. 4, wobei Teile von sechs Sortierbahnen und zwei als Klappen ausgebildete Überbrückungselemente in der Seitenansicht dargestellt sind und wobei die Klappen geschlossen sind, wozu die Klappen im Wesentlichen horizontal angeordnet sind; und
Fig. 6 in derselben Seitenansicht ein Detail D der Fig. 5 und zwei längliche Stückgüter, wobei sich eines der beiden länglichen Stückgüter auf der ersten Sortierbahn befindet und das andere der beiden länglichen Stückgüter sich auf der Abtransportbahn befindet.

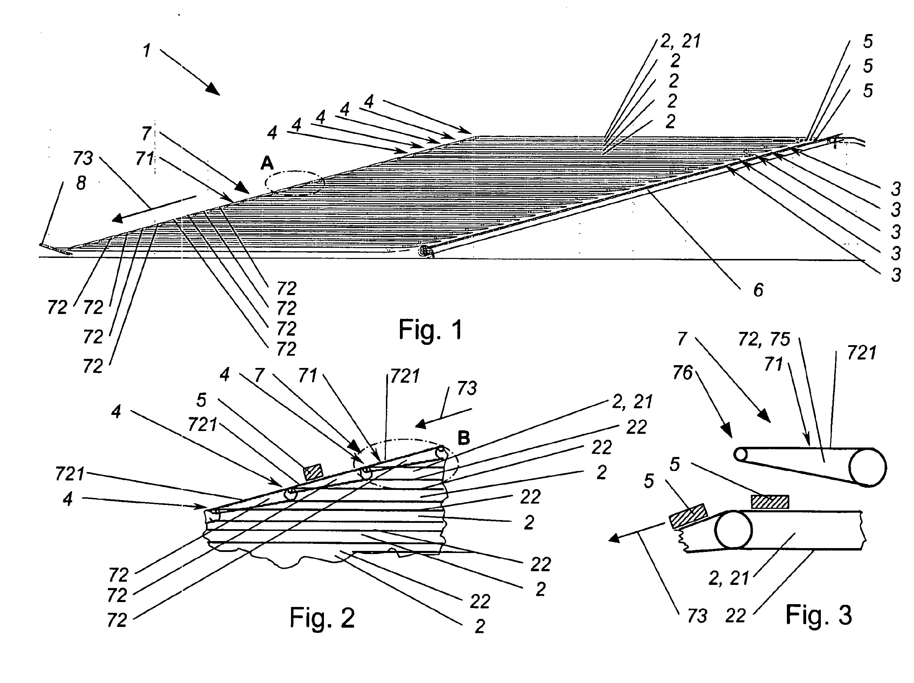

Die Fig. 1 bis 6 zeigen - in der Betriebslage in Seitenansicht - Sortieranlagen 1 einer besonders bevorzugten ersten Ausführungsform und einer bevorzugten zweiten Ausführungsform sowie Teile dieser Sortieranlagen 1 für längliches Stückgut 5 im Quertransport mit mehreren Sortierbahnen 2, wobei jede der Sortierbahnen 2 ein Aufgabeende 3 und ein Ausgabeende 4 aufweist, wobei die Sortierbahnen 2 an den Aufgabeenden 3 von einem Zubringertransporter 6 beschickbar sind und an den Ausgabeenden 4 ein Abtransporter 7 angeordnet ist, wobei das von den Sortierbahnen 2 an den Abtransporter 7 übergebene Stückgut 5 entlang einer Abtransportbahn 71 abtransportierbar ist. Bei der Sortieranlage ist zur brettschonenden sowie energieeffizienten Sortierung mit einem hohen Durchsatz vorgesehen, dass - ausgehend von einer ersten Sortierbahn 21 der Sortierbahnen 2 in Abtransportrichtung 73 gesehen - die Abtransportbahn 71 über die Ausgabeenden 4 der nachfolgenden Sortierbahnen 2 hinweg geführt ist.

Die in den Fig. 1 bis 6 dargestellte Sortieranlagen 1 sowie Teile dieser ermögliche ein Verfahren zum Sortieren von länglichem Stückgut 5 im Quertransport, wobei das Stückgut 5 in eine vorgebbare erste Sortierbahn 21 mehrerer Sortierbahnen 2 von einem Zubringertransporter 6 beschickt wird, wobei das Stückgut 5 in den Sortierbahnen 2 jeweils von einem Aufgabeende 3 zu einem Ausgabeende 4 transportiert wird, das Stückgut 5 zu einer vorgebbaren Zeit an dem Ausgabeende 4 der ersten Sortierbahn 21 einem Abtransporter 7 übergeben wird und entlang einer Abtransportbahn 71 abtransportiert wird, wobei vorgesehen ist, dass das Stückgut 5 entlang der Abtransportbahn 71 über die Ausgabeenden 4 der der ersten Sortierbahn 21 nachfolgenden Sortierbahnen 2 hinweggeführt wird.

Durch die erfindungsgemäße Sortieranlage 1 und/oder durch das erfindungsgemäße Verfahren zum Sortieren von länglichem Stückgut 5 sind die eingangs genannten Vorteile und vorteilhaften Wirkungen erzielt.

Zum Sortieren werden die angeförderten länglichen Stückgüter 5 auf die mehreren Sortierbahnen 2 verteilt. Die Verteilung kann dabei vorbestimmten Kriterien, im Sinne eines Parameters zum Sortieren, beispielsweise Breite, Länge und/oder Astaugenanzahl der länglichen Stückgüter 5, erfolgen. Dabei werden die länglichen Stückgüter 5 mit zueinander ähnlichen Werten des entsprechenden Kriteriums, also mit ähnlichen Werten des dem Kriterium entsprechenden Parameters, in dieselbe Sortierbahn 2 gefördert. Dabei können, je mehr Sortierbahnen vorgesehen sind, mehr unterschiedliche Kriterien gleichzeitig sortiert, insbesondere unterschieden, werden und/oder ein Kriterium kann auf immer mehr, und somit immer feiner unterteilte Wertebereiche, aufgeteilt werden.

Gemäß der ersten und zweiten Ausführungsform der Sortieranlage 1 können die länglichen Stückgüter dabei auf sämtliche Sortierbahnen 2 verteilt werden und dementsprechend genau, gemäß den Kriterien und den dementsprechenden Parametern der Sortierung, sortiert werden. Die in die Sortierbahn 2 einsortierten länglichen Stückgüter 5 können dabei, da nunmehr sortiert, als Sortiment bezeichnet werden. Die Anzahl der Sortierbahnen 2 bestimmt dabei die maximal mögliche Anzahl der Sortierungsmöglichkeiten eines jeden länglichen Stückgutes 5. Die Anzahl der Sortierungsmöglichkeiten kann dabei als Sortimentanzahl bezeichnet werden. Dadurch kann das schnelle und zuverlässige Sortieren und/oder das Umschlichten, also das Ändern einer Reihenfolge, der länglichen Stückgüter 5, gewährleistet werden. Dabei kann eine - im Sinne der gewünschten Förderreihenfolge der länglichen Stückgüter 5 - unsortierte Anförderungsreihenfolge einfach und mit hohem Durchsatz in eine - im Sinne der gewünschten Sortierung der länglichen Stückgüter 5 - sortierte Reihenfolge sortiert werden. Vorteilhafterweise kann dabei, durch das Hinzufügen zusätzlicher Sortierbahnen 2, also durch die Erhöhung der Sortimentanzahl, die maximal mögliche Anzahl von Unterscheidungen der länglichen Stückgüter 5 gemäß des Unterscheidungskriteriums oder der Unterscheidungskriterien gesteigert werden und derart die Sortierung, insbesondere also die Unterscheidung der länglichen Stückgüter 5 zueinander, besonders genau, exakt und fein, erfolgen.

Das längliche Stückgut 5 weist insbesondere eine geradlinige Längsachse auf, wobei die Längsachse beim Transport im Wesentlichen quer zur Transportrichtung angeordnet ist, wobei das längliche Stückgut 5 also im Quertransport transportiert wird. Die zu sortierenden länglichen Stückgüter 5 können zueinander unterschiedliche und/oder im Wesentlichen gleiche Längserstreckung aufweisen. Die länglichen Stückgüter 5 können bevorzugt brettförmig ausgebildet sein und derart einen quadratischen und/oder rechteckigen Querschnitt aufweisen. Die länglichen Stückgüter 5 können insbesondere aus Holz, beispielsweise aus gehobeltem Holzbalken, bestehen.

Zur Sortierung und dabei gegebenenfalls zur Umreihung der länglichen Stückgüter 5, wozu längliche Stückgüter 5 an weiteren in der Sortieranlage 1 befindlichen länglichen Stückgütern 5 vorbeigeführt werden, umfasst die Sortieranlage 1 mehrere Sortierbahnen 2, welche bevorzugt im Wesentlichen parallel sowie - in Betriebslage gesehen - bevorzugt zumindest bereichsweise vertikal übereinander angeordnet sein können. Die in der Anförderungsreihenfolge antransportierten länglichen Stückgüter 5 können dabei auf mehrere Sortierbahnen 2 aufgeteilt werden und in der Sortieranlage 1 aneinander vorbeitransportiert werden. Dies ermöglicht den Abtransport der länglichen Stückgüter 5 in der zur Anförderungsreihenfolge unterschiedlichen sortierten Reihenfolge. Dadurch können die länglichen Stückgüter 5 zu sortierten Paketen länglichen Stückgüter 5 gewährleistet sein, also zu Paketen unmittelbar aufeinanderfolgend geförderter länglicher Stückgüter 5 ähnlicher Werte eines bewerteten Parameters.

Jede Sortierbahn 2 umfasst ein Aufgabeende 3 und ein - am - in Förderrichtung der Sortieranlage 1 gesehen - anderen Ende der Sortierbahn 2 angeordnetes - Ausgabeende 4. Am Aufgabeende 3 wird das längliche Stückgut 5 vom Zubringertransporter 6 auf die Sortierbahn 2 übergeben. Am Ausgabeende 4 wird das längliche Stückgut 5 zum, insbesondere auf den, Abtransporter 7 ausgegeben. Bei sämtlichen Transportschritten wird das längliche Stückgut 5 dabei im Quertransport gefördert, womit die Beschleunigung des länglichen Stückgutes 5 gering, insbesondere im Wesentlichen null, ist und wobei, auch bei hohen Fördergeschwindigkeiten des länglichen Stückgutes 5 geringe Beschleunigungen auf dieses wirken.

Vom Abtransporter 7 wird das längliche Stückgut 5, insbesondere in Richtung der Abtransportrichtung 72, entlang der Abtransportbahn 71 abtransportiert. Die Abtransportbahn 71 kann bevorzugt durch ein oder mehrere Fördermittel, insbesondere Förderbänder, ausgebildet sein.

Jede der Sortierbahnen 2 kann - bezogen auf ein vorbestimmtes längliches Stückgut 5 - als erste Sortierbahn 21 ausgebildet sein, sofern - ausgehend von eben dieser ersten Sortierbahn 21 der Sortierbahnen 2 in Abtransportrichtung 73 gesehen - die Abtransportbahn 71 über die Ausgabeenden 4 wenigstens einer nachfolgenden Sortierbahn 2 hinweg geführt ist und somit das längliche Stückgut 5 beim Abtransport oberhalb weiterer Sortierbahnen 2 hinweg gefördert wird.

Vorteilhaft dabei ist, dass der Winkel, also der Richtungsunterschied, zwischen der Förderrichtung des länglichen Stückgutes 5 beim Zubringen mittels des Zubringertransporters 6 und der Förderrichtung des länglichen Stückgutes 5 entlang der Sortierbahn 2 ein geringer ist. Dadurch ist das längliche Stückgut 5 bei dessen Übertritt vom Zubringertransporter 6 auf die vorbestimmte Sortierbahn 2 auch bei einer hohen Fördergeschwindigkeit lediglich vergleichsweise geringen Beschleunigungen ausgesetzt und kann brettschonend in die Sortierbahnen 2 einsortiert werden.

Vorteilhaft dabei ist, dass der Winkel, also der Richtungsunterschied, zwischen der Förderrichtung des länglichen Stückgutes 5 entlang der Sortierbahn 2 und der Förderrichtung des länglichen Stückgutes 5 mittels des Abtransporters 7 entlang der Abtransportbahn 71 ein geringer ist. Dadurch ist das längliche Stückgut 5 bei dessen Übertritt von der Sortierbahn 2 auf den Abtransporter 7 auch bei einer hohen Fördergeschwindigkeit lediglich vergleichsweise geringen Beschleunigungen ausgesetzt und kann brettschonend in die Sortierbahnen 2 einsortiert werden.

Insbesondere können sowohl Zubringertransporter 6, Sortierbahnen 2 und der Abtransporter 7 im Wesentlichen kontinuierlich angetrieben werden, womit diese drei Fördereinrichtungen energieeffizient angetrieben werden können und womit ein schleifender Kontakt zwischen dem länglichen Stückgut 5 und den drei Fördereinrichtungen der Sortieranlage 1 im Wesentlichen verhindert sein kann.

Erfindungsgemäß ist die Abtransportbahn 71 an den Ausgabeenden 4 an einer der Sortierbahnen 2 abgewandten Seite von Überbrückungselementen 72 ausgebildet, wobei jedes der Überbrückungselemente 72 insbesondere den Abstand zwischen zwei unmittelbar benachbarten Sortierbahnen 2 überbrücken kann. Dadurch kann die Abtransportbahn 71 im Wesentlichen eben ausgebildet sein und vermieden werden, dass im Bereich der Abtransportbahn 71 zwischen zwei Sortierbahnen 2 nach unten hin ein Spalt ausgebildet ist. Dadurch kann der zuverlässige Abtransport des länglichen Stückgutes 5 entlang der Abtransportbahn 71 gewährleistet und das "Hängen bleiben" von länglichem Stückgut 5 vermieden werden.

Erfindungsgemäß sind die Überbrückungselemente 72 als Klappen 75 ausgebildet. Die Klappen können beim Austritt eines der länglichen Stückgüter 5 aufklappen, wobei sich in diesem Bereich ein temporärer Spalt im Abtransporter 7 ausbildet, womit das auszugebende längliche Stückgut 5 durch den temporären Spalt hindurch in Richtung der der Sortierbahnen 2 abgewandten Seite, also der Abtransportbahn 71, der Überbrückungselementen 72 gefördert werden kann. Sobald das auszugebende längliche Stückgut 5 im Wesentlichen vollständig an der Abtransportbahn 71 angelangt ist, schwenkt die Klappe, insbesondere selbsttätig, bevorzugt schwerkraftbedingt, in die Ausgangslange zurück, in welcher kein Spalt ausgebildet ist. Sofern sämtliche, vom Abtransporter 7 umfasste, Klappen 75 in deren Ausgangslage angeordnet sind, so ist die Abtransportbahn 71 im Wesentlichen spaltfrei ausgebildet. Derart kann auf die Ausbildung eines Betätigungselementes der Klappe 75 verzichtet werden, womit die Ausbildung der Klappen 75 besonders günstig erfolgen kann.

Vorzugsweise kann - in Betriebslage gesehen und wie in der Fig. 1 dargestellt - die erste Sortierbahn 21 im Wesentlichen horizontal angeordnet sein. Insbesondere können die Mehrzahl der Sortierbahnen 2 im Wesentlichen horizontal ausgebildet sein. Gemäß der besonders bevorzugten ersten Ausführungsform sind alle Sortierbahnen 2 im Wesentlichen horizontal ausgebildet. Die horizontalen Sortierbahnen 2 können auch als horizontale Filmetagen bezeichnet werden, wobei Filmetage ausdrückt, dass die Längserstreckung der Filmetage wesentlich länger ist als der Normalabstand von der Filmetage zur benachbarten Filmetage.

Dabei sind das Aufgabeende 3 und das Ausgabeende 4 im Wesentlichen auf gleicher Höhe ausgebildet und das längliche Stückgut 5 wird dabei in der Sortierbahn 2 im Wesentlichen horizontal gefördert. Dabei kann die Gesamtanzahl der Sortierbahnen 2 in der Sortieranlage 1 auch durch ein Hinzufügen weiterer Sortierbahnen 2 oder ein Wegnehmen von Sortierbahnen 2 verändert werden. Dadurch, dass die Sortierbahnen 2 dabei im Wesentlichen übereinander angeordnet sind, kann dabei ein im Wesentlichen gleicher Bodenstellplatzbedarf der Sortieranlage 1 benötigt sein, wobei insbesondere eine Anlagenerweiterung ohne oder mit geringer seitlicher Vergrößerung der benötigten Bodenstellfläche eines Betriebsobjektes möglich sein kann.

Durch das Hinzufügen zusätzlicher Sortierbahnen 2 kann auch der mögliche Durchsatz länglicher Stückgüter durch die Sortieranlage 1 hindurch vergrößert werden, womit einfach eine vorbestimmte Kapazität, insbesondere Jahreskapazität, gewährleistet werden kann.

In der Fig. 2 ist das Detail A der Fig. 1 gezeigt, wobei auch hierbei die Betriebslage in Seitenansicht dargestellt ist. In der Fig. 2 ist im Detail der Bereich der Ausgabeenden 4 der Sortierbahnen 2 dargestellt, in welchem die Übergabe des länglichen Stückgutes 5 zum Abtransporter 7 erfolgt. In der in Fig. 2 dargestellten Betriebsstellung, sind die die Überbrückungselemente 72 ausbildenden Klappen 75 zugeklappt, womit oberhalb der Ausgabeenden 4 die Abtransportbahn 71 im Wesentlichen eben und - in Abtransportrichtung 73 gesehen - abfallend ausgebildet ist. Dabei ist ein ortsfestes Ende der - in Fig. 2 in ihrer geschlossenen Stellung - dargestellten Klappen 75 um eine Schwenkachse angeordnet. Wenn ein längliches Stückgut 5 entlang der Sortierbahn 2 zum Ausgabeende - insbesondere im Quertransport - gefördert wird, klappt die das Überbrückungselement 72 ausbildende schwenkbare Klappe 75 nach oben auf und wird dabei in eine geöffnete Stellung verschwenkt, welche im Detail B in Fig. 3 dargestellt ist. Die schwenkbare Klappe 75 ist dazu stationär-verschwenkbar, insbesondere aus deren geschlossener Stellung in deren geöffnete Stellung nach oben verschwenkbar, angeordnet.

In der Fig. 3 ist das Detail B der Fig. 2 gezeigt, wobei die Klappe 75 in der geöffneten Stellung dargestellt ist und somit ein Spalt, insbesondere ein vertikaler Abstand, zwischen einem dem ortsfesten Ende gegenüberliegenden freien Ende 76 der Klappe 75 und der ersten Sortierbahn 21 ausgebildet ist. Bei der Ausgabe des länglichen Stückgutes 5 am Ausgabeende 4 der ersten Sortierbahn 21 und somit bei der Übergabe an den Abtransporter 7, kann das längliche Stückgut 5 bevorzugt durch diesen Spalt hindurch durchgefördert werden.

Auf der Abtransportbahn 71 angekommen wird - nachfolgend der Übergabe das längliche Stückgut 5 weiter in Abtransportrichtung 73 abtransportiert und dabei über weitere Sortierbahnen 2 hinweggefördert.

Die Klappe 75 kann vorteilhafterweise freischwenkend ausgebildet sein. Dabei kann das Verschwenken der Klappe 75 nach oben und in die geöffnete Stellung, durch einen Kontakt mit dem darunter hinweggeförderten länglichen Stückgut 5 bewirkt sein. Die Klappe 75 wird dabei vom länglichen Stückgut 75 nach oben gedrückt. Dabei kann das Verschwenken der Klappe 75 zurück in die geschlossene Stellung und somit nach unten, schwerkraftbedingt durch das Eigengewicht der Klappe 75 bewirkt sein.

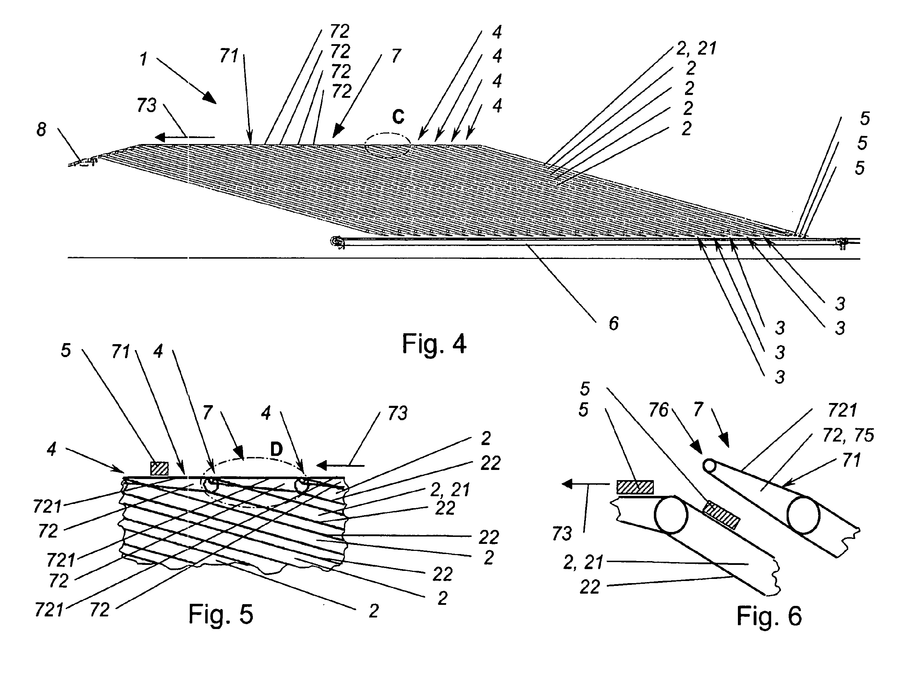

Bei weiteren vorteilhaften Ausführungsformen kann vorgesehen sein, dass - in Betriebslage gesehen - das Ausgabeende 4 der ersten Sortierbahn 21 höher als das Aufgabeende 3 der ersten Sortierbahn 21 angeordnet ist, insbesondere bei der Mehrzahl der Sortierbahnen 2 das Ausgabeende 4 höher als das Aufgabeende 3 angeordnet ist. Gemäß der in Fig. 4 dargestellten bevorzugten zweiten Ausführungsform sind dabei sämtliche Ausgabeenden 4 höher als jede der Aufgabenenden 3 angeordnet, womit die Sortierbahnen 2 ansteigend ausgebildet sind. Die ansteigenden Sortierbahnen 2 können auch als ansteigende Filmetagen bezeichnet werden. Dabei wird das längliche Stückgut 5 bei der Förderung entlang der Sortierbahnen 2 im Wesentlichen stetig schräg nach oben, also ansteigend, gefördert, wobei die schräge Förderung mit einem Winkel zwischen 10° Steigung und 40° Steigung, bevorzugt zwischen 15° Steigung und 30° Steigung, erfolgen kann.

Dadurch kann die Raumhöhe des Betriebsobjektes, insbesondere einer Halle, mitgenutzt werden, wobei sich der vorteilhafte Winkel aus dem für die Sortieranlage 1 verfügbaren Volumen, also der verfügbaren Höhe, Länge und Breite, und der vorbestimmten Anzahl und der vorbestimmten Länge der Sortierbahnen 2 ergibt.

Im Unterschied zu bekannten Sortieranlagen, können bei der derart ausgebildeten Sortieranlagen 1 Sortierbahnen 2 in horizontaler Richtung hinzugefügt und weggenommen werden. Dadurch kann die erfindungsgemäße Sortieranlage 1 - in der Betriebslage gesehen - in horizontaler Richtung, also zur Seite hin, erweitert werden. Die bevorzugte zweite Ausführungsform der Sortieranlage 1 ist dabei insbesondere in Hallen mit beschränkter Raumhöhe interessant. Durch die Erweiterbarkeit der Sortieranlage 1 zur Seite hin, ändert sich die Bauhöhe der Sortieranlage 1 der bevorzugten zweiten Ausführungsform bei Änderung der Anzahl der Sortierbahnen 2 - im Gegensatz zu bekannten Sortieranlagen mit horizontalen und übereinander angeordneten Sortierbahnen 2 - im Wesentlichen nicht. Die Bauhöhe der Sortieranlage 1 bleibt somit unabhängig der Anzahl der Sortierbahnen 2 im Wesentlichen gleich. Die Erweiterung der Sortieranlage 1 zur Seite hin ist insbesondere bei vorhandener verfügbarer Hallenfläche einfach durchzuführen und besonders kostengünstig. Selbst wenn keine frei verfügbare Hallenfläche vorhanden sein sollte, so kann dabei die Anlagenerweiterung der Sortieranlage 1 besonders kostengünstig durch Hallenzubauten, also durch Erweiterung der Halle zur Seite hin, erfolgen. Dabei sind Hallenzubauten insbesondere oftmals kostengünstiger sowie einfacher und schneller durchzuführen als Hallenaufbauten, also eine Erweiterung der Halle nach oben hin.

Die Fig. 5 zeigt das Detail C der Fig. 4, wobei die Klappen 75 in deren geschlossenen Stellung angeordnet sind. Dabei ist die Abtransportbahn 71 im Wesentlichen eben und im Wesentlichen horizontal, wobei in der dargestellten Seitenansicht sowohl die ortsfesten Enden der Klappen 75 als auch die freien Enden 76 der Klappen 75 in einer Horizontalen angeordnet sind. Dadurch kann das längliche Stückgut 5 entlang der Abtransportbahn 71 im Wesentlichen in einer Horizontalen gefördert werden.

Die Fig. 6 zeigt das Detail D der Fig. 5, wobei die Klappen 75 in deren offenen Stellung angeordnet sind, wobei das längliche Stückgut 5 durch den - dazu zwischen der Klappe 75 und dem darunterliegenden ersten Sortierbahn 21 ausgebildeten Spalt - hindurchgefördert werden kann. Dabei wird das längliche Stückgut 5 aus der ersten Sortierbahn 21 ausgegeben und auf die Abtransportbahn 71 übergeben.

Besonders bevorzugt umfassen die Sortierbahnen 2 umlaufende erste Transportmittel 22, wobei der Antrieb der ersten Transportmittel 22 bevorzugt im Bereich der Ausgabeenden 4 angeordnet ist. Dadurch kann das erste Transportmittel 22 in dessen Kontaktbereich mit dem länglichen Stückgut 5 im Wesentlichen ständig auf Zug gehalten werden, also unter Zugspannung stehen. Das erste Transportmittel 22 kann kostengünstig als erstes Förderband und/oder als erste Förderkette ausgebildet sein.

In vorteilhafter Weise können die als Klappen 75 ausgebildeten Überbrückungselemente 72 umlaufende zweite Transportmittel 721 umfassen, wobei der Antrieb der zweiten Transportmittel 721 bevorzugt im Bereich der Schwenkachse der Klappe angeordnet sein kann. Dadurch kann das zweite Transportmittel 721 in dessen Kontaktbereich mit dem länglichen Stückgut 5, welcher einen Bereich der Abtransportbahn 71 ausbildet, im Wesentlichen ständig auf Zug gehalten werden, also unter Zugspannung stehen. Das zweite Transportmittel 721 kann kostengünstig als zweites Förderband und/oder als zweite Förderkette ausgebildet sein.

Durch diese vorteilhafte Anordnung des Antriebs des zweiten Transportmittels 721 kann dieser ein in Richtung der geschlossenen Stellung der Klappe 75 wirkendes Moment ausbilden, womit die Klappe 75 - sofern kein längliches Stückgut 5 an diese Klappe 75 herangefördert wird - besonders zuverlässig in der geschlossenen Stellung angeordnet sein kann.

Bei einer vorteilhaften Weiterbildung kann das als Klappe 75 ausgebildete Überbrückungselement 72 eine Schließfeder zum Aufbringen einer Federkraft in Richtung der geschlossenen Stellung umfassen. Auch dadurch kann die Klappe 75 - sofern kein längliches Stückgut 5 an diese Klappe 75 herangefördert wird - besonders zuverlässig in der geschlossenen Stellung angeordnet sein.

Vorteilhafterweise kann der Zubringertransporter 6 höhenverstellbare Auflagen aufweisen. Bei einem Anheben der Auflagen kann das längliche Stückgut 5 vorbestimmt in den Aufnahmebereich einer Sortierbahn 2 eingebracht werden. Dazu muss das längliche Stückgut 5 lediglich um in etwa etwas mehr als dessen Höhenerstreckung, also die Erstreckung des länglichen Stückgutes 5 sowohl normal zur Transportrichtung als auch normal zur Längserstreckung, angehoben werden. Durch den Einsatz der höhenverstellbaren Auflagen kann auf die Verwendung von Beschickklappen oder Beschickweichen zum Beschicken der Sortierbahnen 2 verzichtet werden.

Insbesondere kann vorgesehen sein, dass der Zubringertransporter 6 als Quertransporter für längliches Stückgut 5 mit wenigstens zwei umlaufenden Zubringerfördermitteln, insbesondere Ketten, Gurte oder Seile, ausgebildet ist, wobei mit den Zubringerfördermitteln zumindest eine Mitnehmerauflageeinheit verbunden ist, wobei die Mitnehmerauflageeinheit zumindest ein mit den Zubringerfördermitteln mitlaufendes Mitnehmerelement zum Mitnehmen des länglichen Stückgutes 5 umfasst und eine - insbesondere im Normalabstand zu den Zubringerfördermitteln - höhenverstellbare Auflage zur Einstellung der Transporthöhe des länglichen Stückgutes 5 auf dem Zubringertransporter 6 umfasst und wobei die Auflage zur Einstellung der unterschiedlichen Transporthöhe relativ zu dem Mitnehmerelement bewegbar ausgebildet ist. Mittels der höhenverstellbaren Auflage kann eines der länglichen Stückgüter 5 unabhängig von den anderen länglichen Stückgütern 5 angehoben bzw. abgesenkt werden. Dabei kann für dieses längliche Stückgut 5 einfach und schnell vorbestimmt werden, ob es in die über dem Zubringertransporter 6 angeordnete Sortierbahn 2, insbesondere die erste Sortierbahn 21, hinein gefördert, insbesondere hineingeführt wird, oder an eben dieser Sortierbahn 2 vorbeigeführt wird, insbesondere vorbeigeführt wird um in eine der nachfolgenden weiteren Sortierbahnen 2 hineingefördert und derart einsortiert zu werden. Dadurch kann das Beschicken der länglichen Stückgüter 5 in vorbestimmte Sortierbahnen 2 besonders zuverlässig und stückgutschonend erfolgen und auf die Verwendung von Beschickklappen oder Beschickweichen zum Beschicken der Sortierbahnen 2 verzichtet werden.

## Patentansprüche

1. Sortieranlage (1) für längliches Stückgut (5) im Quertransport mit mehreren Sortierbahnen (2), wobei jede der Sortierbahnen (2) ein Aufgabeende (3) und ein Ausgabeende (4) aufweist, wobei die Sortierbahnen (2) an den Aufgabeenden (3) von einem Zubriungeztransporter (6) beschickbar sind und an den Ausgabeenden (4) ein Abtransporter (7) angeordnet ist, wobei das von den Sortierbahnen (2) an den Abtransporter (7) übergebene Stückgut (5) entlang einer Abtransportbahn (71) abtransportierbar ist, **dadurch gekennzeichnet, dass** - ausgehend von einer ersten Sortierbahn (21) der Sortierbahnen (2) in Abtransportrichtung (73) gesehen - die Abtransportbahn (71) über die Ausgabeenden (4) der nachfolgende Sortierbahnen (2) hinweg geführt ist, dass die Abtransportbahn (71) an den Ausgabeenden (4) an einer der Sortierbahnen (2) abgewandten Seite von Überbrückungselementen (72) ausgebildet ist, und dass die Überbrückungselemente (72) als Klappen (75) ausgebildet sind

2. Sortieranlage nach Anspruch 1, **dadurch gekennzeichnet, dass** - in Betriebslage gesehen - das Ausgabeende (4) der ersten Sortierbahn (21) höher als das Aufgabeende (3) der ersten Sortierbahn (21) angeordnet ist, insbesondere bei der Mehrzahl der Sortierbahnen (2) das Ausgabeende (4) höher als das Aufgabeende (3) angeordnet ist.

3. Sortieranlage nach Anspruch 1 oder 2, **dadurch** gekennzeichet, dass - in Betriebslage vom Aufgabeende (3) zum Ausgabeende (4) gesehen - die erste Sortierbahn (21) stetig ansteigend ausgebildet ist, insbesondere die Mehrzahl der Sortierbahnen (2) stetig ansteigend ausgebildet sind.

4. Sortieranlage nach Anspruch 1 oder 2, **dadurch gekennzeichnet, dass** - in Betriebslage gesehen - die erste Sortierbahn (21) im Wesentlichen horizontal angeordnet ist, insbesondere die Mehrzahl der Sortierbahnen (2) im Wesentlichen horizontal angeordnet sind.

5. Sortieranlage nach einem der Ansprüche 1 bis 4, **dadurch gekennzeichnet, dass** die Sortierbahnen (2) umlaufende erste Transportmittel (22) umfassen, und dass der Antrieb der ersten Transportmittel (22) im Bereich der Ausgabeenden (4) angeordnet ist.

6. Sortieranlage nach einem der Ansprüche 1 bis 5, **dadurch gekennzeichnet, dass** der Zubringertransporter (6) höhenverstellbare Auflagen aufweist.

7. Sortieranlage nach einem der Ansprüche 1 bis 6, **dadurch gekennzeichnet, dass** der Zubringertransporter (6) wenigstens zwei umlaufende Zubringerfördermittel umfasst, dass mit den Zubringerfördermitteln zumindest eine Mitnehmerauflageeinheit verbunden ist, und dass die Mitnehmerauflageeinheit zumindest ein mit den Zubringerfördermitteln mitlaufendes Mitnehmerelement und zumindest eine höhenverstellbare Auflage umfasst.

## Claims

1. A sorting installation (1) for elongated piece goods (5) in transverse transport, comprising several sorting paths (2), with each of the sorting paths (2) having an input end (3) and output end (4), with the sorting paths (2) being feedable at the input ends (3) by a delivery transport device (6), and a take-off transport device (7) being arranged at the output ends (4), with the piece good (5) transferred by the sorting paths (2) to the take-off transport device (7) being removable along a take-off transport path (71), **characterized in that** as seen starting from a first sorting path (21) of the sorting paths (2) in the take-off transport direction (73) the take-off transport path (71) is guided beyond the output ends (4) of the subsequent sorting paths (2), the take-off transport path (71) is arranged at the output ends (4) on a side of bridging elements (72) which face away from the sorting paths (2), and the bridging elements (72) are arranged as flaps (75).

2. A sorting installation according to claim 1, **characterized in that**, when seen in the operational position, the output end (4) of the first sorting path (21) is arranged at a higher level than the input end (3) of the first sorting path, especially the output end (4) is arranged at a higher level than the input end (3) in a plurality of the sorting paths (2).

3. A sorting installation according to claim 1 or 2, **characterized in that**, when seen in the operational position from the input end (3) to the output end (4), the first sorting path (21) is arranged to rise consistently, especially the plurality of the sorting paths (2) are arranged in a consistently rising manner.

4. A sorting installation according to claim 1 or 2, **characterized in that**, when seen in the operational position, the first sorting path (21) is arranged substantially horizontally, especially the plurality of the sorting paths (2) is arranged substantially horizontally.

5. A sorting installation according to one of the claims 1 to 4, **characterized in that** the sorting paths (2) comprise revolving first transport means (22) and the drive of the first transport means (22) is arranged in the area of the output ends (4).

6. A sorting installation according to one of the claims 1 to 5, **characterized in that** the delivery transport device (6) comprises height-adjustable supports.

7. A sorting installation according to one of the claims 1 to 6, **characterized in that** the delivery transport device (6) comprises at least two revolving feed conveying means, at least one driver support unit is connected with the feed conveying means, and the driver support unit comprises at least one driver element which co-revolves with the feed conveying means and comprises at least one height-adjustable support.

## Revendications

1. Installation de triage (1) pour des articles allongés (5) transportés transversalement avec plusieurs pistes de triage (2), dans laquelle chacune des pistes de triage (2) présente une extrémité de dépose (3) et une extrémité de sortie (4), dans laquelle les pistes de triage (2) peuvent être garnies aux extrémités de dépose (3) par un convoyeur d'alimentation (6) et un convoyeur d'évacuation (7) est disposé aux extrémités de sortie (4), dans laquelle l'article (5) remis par la piste de triage (2) au convoyeur d'évacuation (7) peut être évacué le long d'une piste d'évacuation (71), **caractérisée en ce que**, vue de la première piste de triage (21) parmi les pistes de triage (2) dans la direction d'évacuation (73), la piste d'évacuation (71) passe au-delà des extrémités de sortie (4) des pistes de triage (2) suivantes, **en ce que** la piste d'évacuation (71) est formée aux extrémités de sortie (4) par des éléments de franchissement (72) sur un côté opposé à une des pistes de triage (2) et **en ce que** les éléments de franchissement (72) sont conformés comme des volets (75).

2. Installation de triage selon la revendication 1, **caractérisée en ce que**, vue dans la position de fonctionnement, l'extrémité de sortie (4) de la première piste de triage (21) est disposée plus haut que l'extrémité de dépose (3) de la première piste de triage (21), en particulier que, dans la multiplicité des pistes de triage (2), l'extrémité de sortie (4) est disposée plus haut que l'extrémité de dépose (3).

3. Installation de triage selon la revendication 1 ou 2, **caractérisée en ce que**, vue dans la position de fonctionnement de l'extrémité de dépose (3) vers l'extrémité de sortie (4), la première piste de triage (21) a une construction en pente ascendante continue, en particulier que la multiplicité de pistes de triage (2) ont une construction en pente ascendante continue.

4. Installation de triage selon la revendication 1 ou 2, **caractérisée en ce que**, vue dans la position de fonctionnement, la première piste de triage (21) est disposée sensiblement à l'horizontale, en particulier que la multiplicité des pistes de triage (2) sont disposées sensiblement à l'horizontale.

5. Installation de triage selon l'une des revendications 1 à 4, **caractérisée en ce que** les pistes de triage (2) comprennent des premiers moyens de transport (22) circulants, et **en ce que** l'entraînement des premiers moyens de transport (22) est disposé au niveau des extrémités de sortie (4).

6. Installation de triage selon l'une des revendications 1 à 5, **caractérisée en ce que** le convoyeur d'alimentation (6) présente des appuis réglables en hauteur.

7. Installation de triage selon l'une des revendications 1 à 6, **caractérisée en ce que** le convoyeur d'alimentation (6) comprend au moins deux moyens de transport d'alimentation circulants, **en ce qu'**au moins une unité d'appui d'entraînement est reliée aux moyens de transport d'alimentation, et **en ce que** l'unité d'appui d'entraînement comprend au moins un élément entraîneur circulant avec les moyens de transport d'alimentation et au moins un appui réglable en hauteur.
